# EUROPEAN PATENT SPECIFICATION

(11) **EP 0 765 024 B1**
(45) Date of publication and mention of the grant of the patent: **19.05.1999**
(21) Application number: 96114819.4
(22) Date of filing: 16.09.1996
(51) Int. Cl.: H02K 5/22

(54) **Electric motor equipped for connection to a cable provided with a connector**
Elektrischer Motor mit einer Verbindung zu einem mit einem Verbinder ausgestatteten Kabel
Moteur électrique muni d'une connexion pour un câble pourvu d'un connecteur

(30) Priority: 19.09.1995 IT MI951948
(43) Date of publication of application: 26.03.1997
(73) Proprietor: ELCO S.p.A., 24100 Bergamo (IT)
(72) Inventor: Colombo,Aldo, 20065 Inzago(MI) (IT)
(74) Representative: Petruzziello, Aldo

(56) References cited:
- EP-A- 0 188 930
- EP-A- 0 321 646
- EP-A- 0 329 282
- WO-A-93/05562
- WO-A-95/08208
- DE-A- 3 625 109
- DE-A- 3 923 351
- DE-A- 4 444 309
- GB-A- 2 283 133
- US-A- 5 001 379
- US-A- 5 015 894
- US-A- 5 120 231

## Description

The present invention relates to an electric motor for connection by means of a mechanically retained electric connector.

As is known, electric motors are currently supplied already equipped with an electric cable for connection to the electrical network, coming out of the frame of the motor. The cable specifications are indicated by the purchasers, usually manufacturers of household electrical appliances or of machinery in general, who assemble the motors inside their products in a way that is standardized for a particular product line.

Customization of the motor with the cable according to the purchaser's requirements is currently done during assembly of the motor, namely when the connections are made between the cable and the stator of the motor.

This gives rise to a number of drawbacks.

First of all, once the cable has been connected to the stator, it must be carried along throughout the subsequent stages of assembly of the motor, which can be a considerable hindrance. The same problems arise during the subsequent stages of storing and transporting a motor equipped with an irremovably connected cable.

Another drawback of pre-connection of the cable to the stator is that the motor assembly line has to be modified each time.

The obvious outcome of the foregoing considerations is that orders for limited quantities can be met only with an increase in the unit price of the motor, which in the end is passed on to the consumer.

US-A-5 015 894 describes an electric motor having an electrical connector element which remains inside the casing of the motor and is accessible through a window made in the casing for connection of an external connector element. With such an arrangement the mechanical stresses during connection and disconnection are transmitted to the stator.

DE-A-3 923 351 describes the fixing of a connector element between two plane semi-plates. Such a block structure does not seem to be realizable on an electric motor, unless the structure of the motor is radically modified.

GB-A-2 283 133 describes an electric motor according to the preamble of claim 1, wherein a connector element is housed in a three-side window provided in the outer frame of the motor. However, according to such arrangement it is necessary to electrically connect the connector element to the stator during the assemblage of the motor.

The invention proposes to eliminate the above drawbacks.

An aim of the invention is to provide a motor assembly which is unaffected by the type of cable requested by the purchaser.

Another aim of the invention is to provide an electric motor in which customization of the cable can also be done by the user.

These aims are achieved by providing an electric motor as claimed in claim 1.

Preferred embodiments of the invention are further specified in dependent claims 2 to 7.

Further characteristics of the invention will be made clearer by the detailed description that follows, referring to a purely exemplary and therefore non-limiting embodiment, illustrated in the attached drawings in which:
Figure 1 is a diagrammatic axonometric overall view of a motor provided with a connector element according to the invention;
Figure 2 is a similar view to that in Figure 1, showing the cover removed and, separate from it, the connector element;
Figure 3 is an axonometric view of a flange supporting the field or operating winding (not shown) and ready to receive the contacts of the connector element integral with the motor;
Figure 4 is a similar view to that in Figure 3, showing blade contacts inserted in special seats provided in a block integral with the insulating support flange;
Figure 5 is a view of Figure 4 from another angle;
Figure 6 is a similar view to Figure 4, in which the contact blades have been bent outwards 90 degrees;
Figure 7 is a view similar to those of the preceding figures, showing the connector element integral with the motor complete with the relative casing;
Figure 8 is a partial front view of a motor provided with a connector element according to the invention;
Figure 9 is an end view, taken in the direction of the arrow F in Figure 8, also containing two views of a connector element integral with the external connecting cable;
Figure 10 is a sectional view, showing the quadrant of Figure 9 containing the connector element;
Figure 11 is a section taken along the line XI-XI in Figure 10;
Figure 12 is a front view of the casing of the connector element integral with the motor;
Figure 13 is a view taken in the direction of the arrow A in Figure 12;
Figure 14 is a view taken from the opposite side with respect to Figure 12;
Figure 15 is a section taken along the line XV-XV in Figure 12.

With reference to these figures, 1 indicates an electric motor as a whole, equipped with a connector element according to the invention.

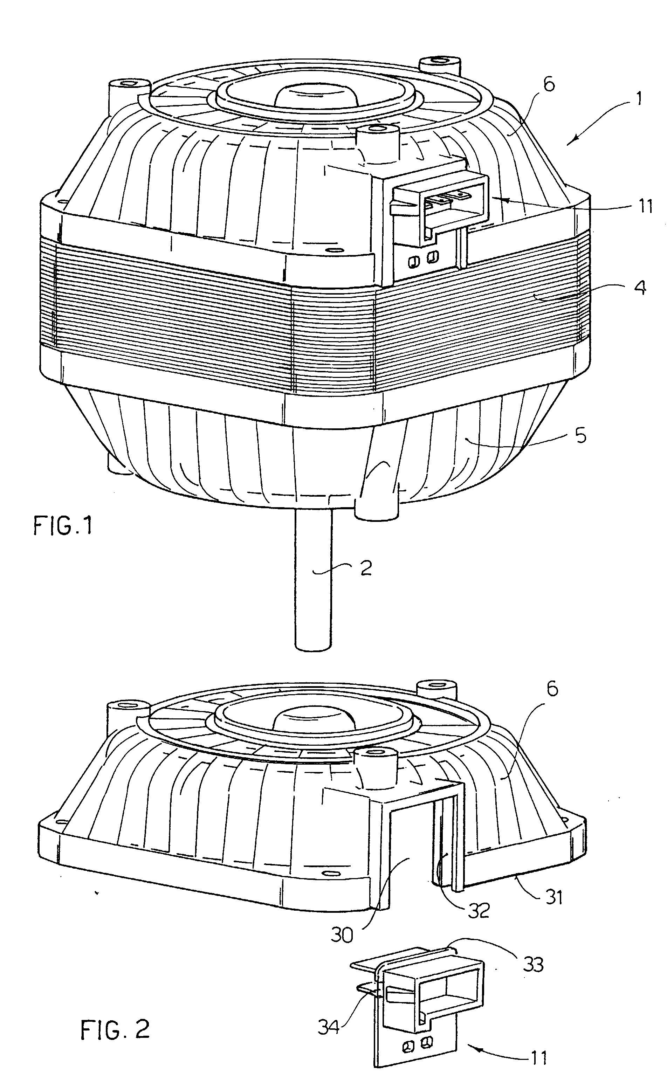

The motor 1 illustrated is of the type with the stator outside the rotor, whose shaft 2, set axially to the motor, is indicated in Figure 1.

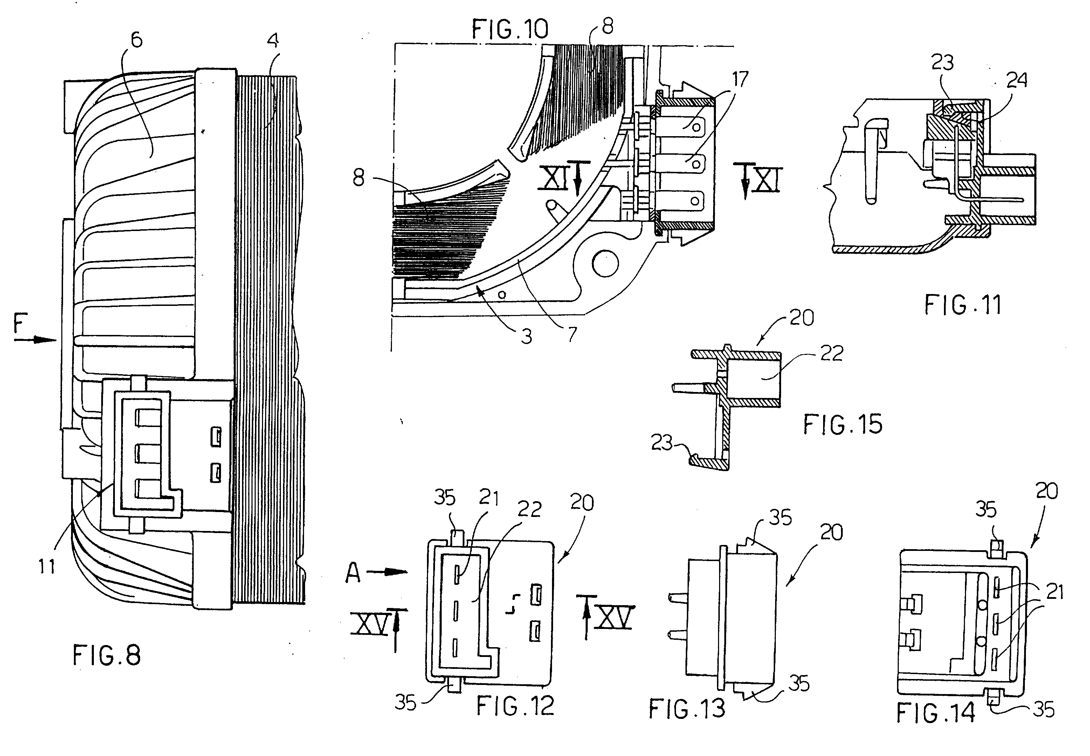

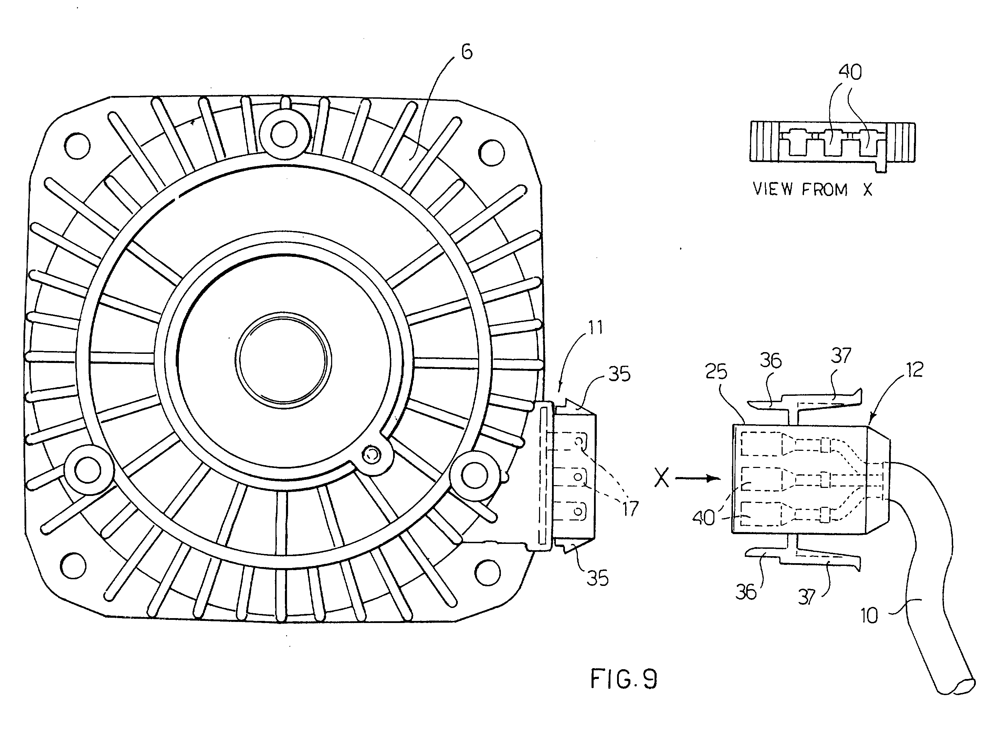

In the embodiment illustrated in the attached figures, the stator, indicated as a whole with reference number 3 (Figure 10), comprises a stack of sheets 4, which remains on view and is closed by two opposite covers 5, 6, an insulating flange 7, on each side of the stack of sheets 4, and a plurality (four) of field or operating windings 8.

To supply power to the motor a cable must be connected to the terminals of the field windings 8 and to the earth.

As described in the introductory part of the patent, this is currently done by soldering supply cable conductors to the terminals of the windings 8, so that the cable remains irremovably connected to the stator 3 through all the subsequent stages of assembly, storage and transportation of the motor.

According to the invention, a connector is provided that allows subsequent connection of a supply cable 10, schematically illustrated in Figure 9.

For this purpose, a male connector element 11 is provided on the motor, said element engaging with a female connector element 12, carried by the cable 10 (Figure 9).

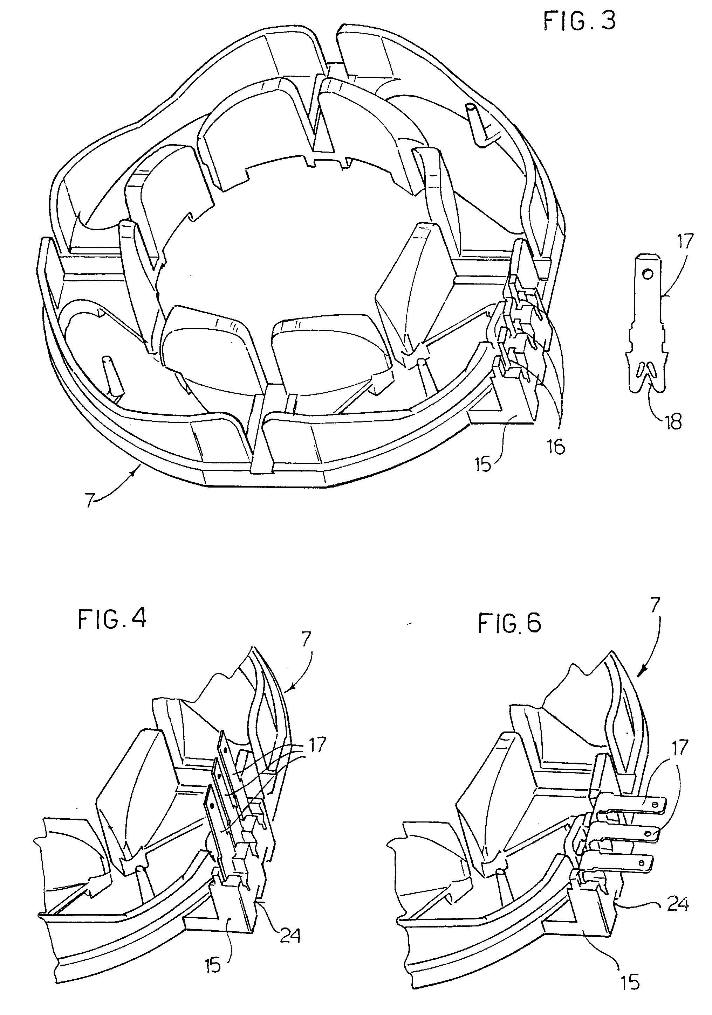

With reference now to the other figures, and particularly to Figures 3 to 7, an example of assembly of the male connector element 11 will be described.

Figure 3 shows schematically an insulating flange 7 of the stator 3, which also acts as a support for the field windings 8, not shown in this figure to facilitate comprehension. As can be seen in this figure, the insulating flange 7 bears a block 15, preferably protruding from it, and bearing a plurality of vertical seats 16. The protruding block 15 is preferably made in a single body with the flange 7, during forging.

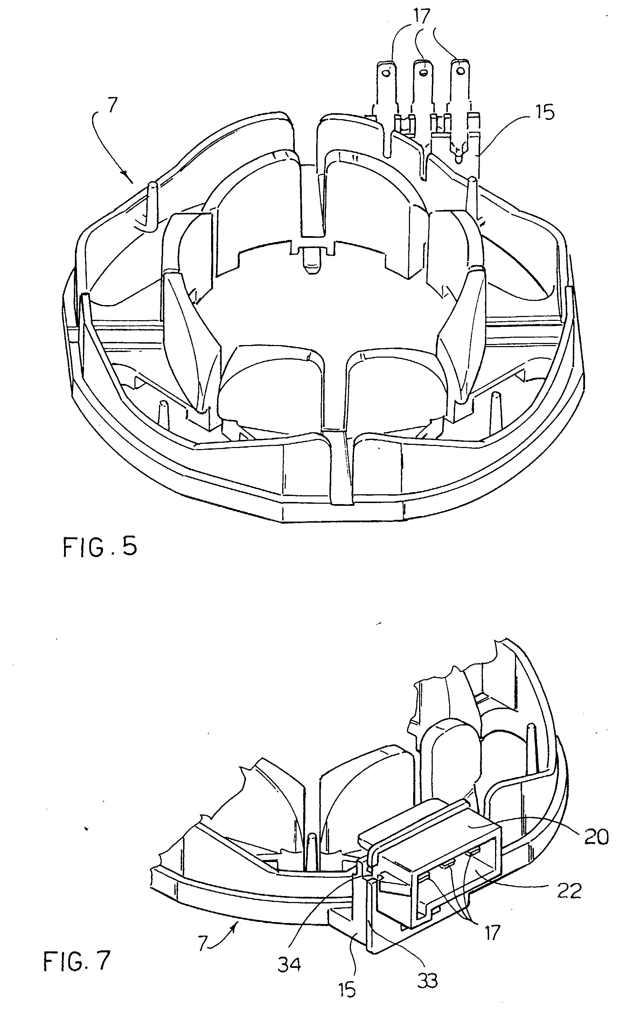

Blade contacts or terminals 17 are inserted in the respective seats 16, where they are self-locking, taking on the shape shown in Figures 4 and 5. In particular, according to the embodiment illustrated, the contacts 17 have a groove 18, which can close directly on a wire provided in the corresponding seat 16, scarfing it and thus ensuring electrical continuity. The contacts 17 are then bent outwards 90°, as shown in Figure 6.

To complete the connector element, the contact terminals 17 are enclosed in an outer casing 20, inserted axially on the contacts, which locks mechanically on the block 15 by means of snap engaging means, (Fig. 7).

Figures 12 and 15 illustrate in detail the shape of the connector casing 20, whilst Figures 8 to 11 show in greater detail assembly of the connector element 11 on the motor.

As can be seen in these figures, the casing 20 has a series of through holes 21 for insertion of the contact terminals 17 which are thus arranged in a cavity 22, destined to accommodate a body 25 of the female connector element 12 carried on the cable 10. The casing 20 also has a pair of small teeth 23, able to engage with corresponding projections 24 on the block 15, and other locators that engage with corresponding matching locators on the block 15, to ensure that the casing 20 is firmly locked to the block 15.

The cover 6 that is situated on the same side as the connector element 11 has a window 30 in one of its side walls, left open at the lower edge 31 of the cover, and having along its inner perimeter a guide groove 32, designed to house a corresponding rim 33 around the perimeter of the casing 20.

The rim 33 has two breaks 34 on each of its sides, corresponding with teeth 35 on the casing 20 with which corresponding perforated tabs 36 on the female connector element 12 engage to ensure mechanical restraint during connection. Disconnection is carried out by pressing on the two elastic rear extensions 37 of the perforated tabs 36, and pulling on the female connector element 12.

As can be seen in the details in Figure 9, the female connector element 12 has female contacts 40 inside it, destined to receive the male contacts 17 of the connector element 11 provided on the motor.

Of course, the technique illustrated is only one of those possible for assembly of a connector element on the motor 2, other techniques being possible to achieve the intended aim of the invention, which is to provide a connector element on the motor, avoiding the pre-wiring of the prior art.

Particularly, it is for example possible to foresee that the contact terminals 17 of the male connector element 11 extend in a rectilinear way, perpendicularly to the flange 7, without being bent outwards by 90° as previously described, remaining accessible from the top (with reference to the figures). In such a case, preferably, the female connector element 12 is L-shaped, so that the cable 10 protrudes from the motor in the same direction as shown in the enclosed figures.

From what is described the advantages of the invention are clear in that it is possible to customize the cable 10 when the motor 1 is already assembled.

## Claims

1. An electric motor, provided with an electrical connector element (11) accessible through a window (30) made in a cover (6) of the outer frame of the motor for connection of an external supply cable (10) equipped with a matching electrical connector element (12), said window (30) being open at the lower edge (31) of the cover (6) and having its three sides which fit around the outer edge of said connector element (11) for housing and blocking it in position, characterized in that said connector element (11) is fixed mechanically to an insulating flange (7) of the stator (3), acting as a support for the stator windings or coils (8), so that such connector element (11) is pre-mounted on the stator before assembling the motor.

2. Electric motor according to claim 1, characterized in that said connector element (11) is fixed mechanically to a block (15) protruding from the outer edge of the insulating flange of the stator, and in that said block (15) has seats (16) to house contact terminals (17) and locators (24) for snap engagement of the outer casing (20) of said connector element (11).

3. Electric motor according to claim 2, characterized in that said contact terminals (17) are self-locking in said respective seats (16), and are bent outwards 90° before assembly of said outer casing (20).

4. Electric motor according to any one of the claims from 1 to 3, characterized in that said contact terminals (17) extend in a rectilinear way, perpendicularly to the said insulating flange (7).

5. Electric motor according to claim 1, characterized in that a groove (32) is foreseen around the perimeter of the inner edge of said window, said groove being for housing a peripheral rim (33) provided on an outer casing (20) of the connector element (11).

6. Electric motor according to claim 1 or 5, characterized in that said connector element (11) provided on the motor (1) is equipped with retaining means (35), for engagement with matching means (36) provided on said matching electrical connector element (12) carried by the cable (10), to ensure mechanical retention of the connection.

7. Electric motor according to claim 6, wherein said retaining means (35) are in the form of teeth on said casing (20) of the connector element (1), and said matching means (36) are in the form of perforated tabs.

## Patentansprüche

1. Ein mit einem elektrischen Verbinderelement (11) ausgestatteter Elektromotor, der über ein Fenster (30) zugänglich ist, welches sich in einem Deckel (6) des Außengehäuses des Motors für die Verbindung von einem Außenspeisekabel (10) befindet, welches mit einem zusätzlichen elektrischen Verbinderelement (12) ausgestattet ist, besagte Fenster (30), das in Übereinstimmung mit dem unteren Rand (31) des Deckels (6) offen ist und drei Seiten hat, die sich um den Außenrand des besagten Verbinderelementes (11) anpassen, zu dem Zweck das besagte Element in Position aufzunehmen und zu blockieren, dadurch gekennzeichnet, daß das besagte Verbinderelement (11) mechanisch an einem Isolationsflansch (7) des Stators (3) befestigt ist, der als Halter der Ständerwicklungen (8) dient, so daß jenes Verbinderelement (11) vor dem Zusammenbau des Motors, auf den Stator vormontiert ist.

2. Ein Elektromotor nach Patentanspruch 1, dadurch gekennzeichnet, daß das besagte Verbinderelement (11) mechanisch an einem überstehenden Block (15) befestigt ist, welcher über den Außenrand eines Isolationsflansches des Stators übersteht und auf Grund der Tatsache, daß der besagte Block (15) Sitze (16) für die Aufnahme der Kontaktenden (17) und der Kontrolle (24), für den Auslösungseinsatz der Außenumhüllung (20) des besagten Verbinderelementes (11) hat.

3. Ein Elektromotor nach Patentanspruch 2, dadurch gekennzeichnet, daß die besagten Kontaktenden (17) in den besagten Sitzen (16) selbstsperrend sind und vor dem Zusammenbau der besagten Außenumhüllung (20), um 90° nach außen hin gebogen sind.

4. Ein Elektromotor nach irgendeinem der Patentansprüche von 1 bis 3, dadurch gekennzeichnet, daß sich die besagten Kontaktenden (17) geradlinig, senkrecht zum besagten Isolationsflansch (7) ausdehnen.

5. Ein Elektromotor nach Patentanspruch 1, dadurch gekennzeichnet, daß eine Rille (32) um den internen Randumfang des besagten Fensters vorgesehen ist. In dem besagten Rand befindet sich die Aufnahme einer Außeneinfassung (33), die auf der besagten Außenumhüllung (20) des Verbinderelementes (11) vorgesehen ist.

6. Ein Elektromotor nach Patentansprüchen 1 oder 5, dadurch gekennzeichnet, daß das besagte auf dem Motor (1) vorgesehene Verbinderelement (11) mit Haltungsmittel (35) ausgestattet ist, die mit Zusatzmitteln (36) verwendet werden, die auf dem besagten Verbinderelement (12) durch ein Kabel (10) getragen werden, um die mechanische Haltung des Anschlusses zu gewährleisten.

7. Ein Elektromotor nach Patentanspruch 6, in dem die besagten Haltungsmittel (35) sich zahnförmig auf der besagten Außenumhüllung (20) des Verbinderelementes (1) befinden, in denen die besagten Zusatzmittel (36) in Form von durchbohrten Rippen sind.

## Revendications

1. Moteur électrique pourvu d'un élément de connecteur électrique (11) auquel on accède par une fenêtre (30) réalisée dans un couvercle (6) de la carcasse extérieure du moteur pour le raccordement d'un câble extérieur d'alimentation (10) muni d'un élément de onnecteur électrique complémentaire (12), cette fenêtre (30) étant ouverte au niveau du bord inférieur (31) du couvercle (6) et ses trois côtés s'adaptant autour du bord extérieur de l'élément de connecteur (11) afin de le loger et le bloquer en position, caractérisé par le fait que l'élément de connecteur électrique (11) est fixé mécaniquement à une bride d'isolation (7) du stator (3), servant de support des enroulements du stator (8), de sorte que l'élément de connecteur (11) est prémonté sur le stator avant l'assemblage du moteur.

2. Moteur électrique selon la revendication 1, caractérisé par le fait que l'élément connecteur (11) est fixé mécaniquement à un bloc (15) dépassant du bord extérieur d'une bride isolante du stator et par le fait que le bloc (15) a des sièges (16) pour le logement de cosses de contact (17) et de butées (24) pour la fixation par encastrement de l'enveloppe extérieure (20) de l'élément de connecteur (11).

3. Moteur électrique selon la revendication 2, caractérisé par le fait que les cosses de contact (17) se bloquent automatiquement dans les sièges respectifs (16) et sont pliés vers l'extérieur à 90° avant l'assemblage de l'enveloppe extérieure (20).

4. Moteur électrique selon une revendication quelconque des revendications de 1 à 3, caractérisé par le fait que les cosses de contact (17) s'étendent en mode rectiligne, perpendiculairement à la bride d'isolation (7).

5. Moteur électrique selon la revendication 1, caractérisé par le fait qu'une rainure (32) est prévue autour du périmètre du bord intérieur de la fenêtre, cette rainure logeant un cadre de périmètre (33) prévu sur l'enveloppe extérieure (20) de l'élément de connecteur (11).

6. Moteur électrique selon la revendication 1 ou 5, caractérisé par le fait que l'élément de connecteur (11) prévu sur le moteur (1) est pourvu d'éléments de retenue (35), se fixant au moyen d'éléments complémentaires (36) prévus sur l'élément de connecteur (12) porté par le câble (10), pour assurer la retenue mécanique de la connexion.

7. Moteur électrique selon la revendication 6, dont lesdits éléments de retenue (35) sont en forme de dents sur l'enveloppe (20) de l'élément de connecteur (1), et dont les éléments complémentaires (36) sont en forme d'ailettes percées.
